# EUROPEAN PATENT APPLICATION

(11) **EP 3 170 948 A1**
(43) Date of publication of application: **24.05.2017**
(21) Application number: 16199303.5
(22) Date of filing: 17.11.2016
(51) Int. Cl.: E04C 2/288, E04C 2/52, F24D 3/00, F24D 3/14

(54) **STRUCTURAL PANEL HEATING SYSTEM**

(30) Priority: 17.11.2015 GB 201520266
(71) Applicant: McCrea, Brendan, Holywood County Down BT18 8RU (GB)
(72) Inventor: McCrea, Brendan, Holywood County Down BT18 8RU (GB)
(74) Representative: Wallace, Alan Hutchinson

(57) **Abstract**

A structural panel comprising a core made from a thermally insulating material, wherein said core is sandwiched between load bearing outer coverings or facings, wherein said load bearing coverings or facings each comprise a reinforcement means embedded within a binding material, wherein at least one conduit arrangement is embedded within said binding material.

## Description

### FIELD OF THE INVENTION

This invention relates to a structural building panel and in particular to a structural building panel incorporating a heat transfer system.

### BACKGROUND TO THE INVENTION

Due to the increasing cost of fuel and the heightened attention of governments on the emissions produced by burning fossil fuels, more and more people are looking to increased insulation and renewable energy sources to heat and power their homes. Typically a significant amount of heat is lost due to low efficiency of insulation. However even with increased insulation there is always the desire to make better use of the natural resources available. Exterior walls and panels are exposed to the sun during the day and during this time they absorb a proportion of the thermal radiation in the form of heat, this is typically dissipated during the night into the cooler air. However this energy could be better utilised to reduce the cost homeowners spend heating their homes and thereby also reduce the emissions produced via the burning of fossil fuels. Furthermore in developing countries where access to central heating systems is limited this energy could be used to better effect to provide easy access to hot water thereby aiding in the prevention of disease.

Therefore there exists a need to better utilise this energy for the provision of heating and in the process reduce fuel costs and carbon emissions.

### SUMMARY OF THE INVENTION

Accordingly, a first aspect of the present invention provides a structural panel comprising a core made from a thermally insulating material, wherein said core is sandwiched between load bearing outer coverings or facings, wherein said load bearing coverings or facings each comprise a reinforcement means embedded within a binding material, wherein at least one conduit arrangement is embedded within said binding material.

Ideally, the conduit arrangement is configured to carry a heat transfer medium whilst embedded within said binding material in-use.

Preferably, the conduit arrangement extends in a substantially convoluted arrangement.

Ideally, the conduit arrangement comprises a single portion.

Optionally, the conduit arrangement comprises a plurality of conduit sections which are coupleable together.

Ideally, the conduit arrangement includes flow and return pathways.

Preferably, the flow and return pathways extend out of the structural panel.

Ideally, the conduit arrangement extends from one side of the structural panel to the opposing side through the core.

Preferably, the conduit arrangement extends from one side of the structural panel to the opposing side such that it, at least in part, extends out of and away from the opposing side.

Ideally, the conduit arrangement comprises a plastic material such as ABS, UPVC, CPVC, PB-1, PP, LDPE, HDPE, PVDF; or any combination thereof.

Preferably, the core comprises expanded polystyrene in block form, or in the form of pre-expanded polystyrene beads bonded together using an adhesive to form a block of insulation.

Ideally, said binding material comprises concrete, or, plaster, or, mud, or any combination thereof.

A second aspect of the present invention provides a system for transferring heat comprising, a structure incorporating at least one structural panel as described in any previous statement, wherein at least one conduit arrangement is embedded in an exterior face of said at least one structural panel, wherein said conduit arrangement is coupled to at least one of a heat exchanger or thermal store, wherein said conduit arrangement is configured to carry a heat transfer medium therein.

Ideally, the heat exchanger is configured to transfer thermal energy from the transfer medium of said at least one conduit arrangement to at least one other transfer medium in at least one other conduit arrangement in-use.

Preferably, a first conduit arrangement is embedded in the exterior face of said at least one of said structural panels and a second conduit arrangement is embedded in an interior face of said at least one structural panel or in an interior face of a second structural panel.

Ideally, the first and second conduit arrangements are coupled to the heat exchanger, wherein the heat transfer medium contained within the first conduit arrangement, is configured to absorb thermal energy from the atmosphere exterior of the structure.

Preferably, the heat exchanger is configured to transfer the thermal energy from the first to the second conduit arrangement, wherein the second conduit arrangement is configured to dissipate said thermal energy into the interior of said structure.

Ideally, the at least one conduit arrangement is embedded in the exterior face of said at least one structural panel, wherein the conduit arrangement is coupled to the thermal store.

Preferably, said thermal store is in fluid communication with at least one outlet via said at least one conduit arrangement.

Ideally, said thermal store is located in a position substantially above said outlet, wherein said heat transfer medium is operable to flow out of said outlet in-use.

Preferably, said outlet extends out of an interior face of said at least one structural panel, wherein said outlet comprises a tap, or nozzle.

Optionally, a solar panel arrangement is provided and is configured to heat the transfer medium of the at least one conduit arrangement.

Ideally, said solar panel arrangement is configured to power an electric heater such as an immersion heater located within said conduit arrangement and/or thermal store and/or heat exchanger in-use.

Optionally, a solar collector arrangement may be coupled to the heat exchanger via a conduit arrangement, wherein a transfer contained medium therein is configured to absorb thermal energy and transfer this within the heat exchanger or thermal store in-use.

Optionally, said conduit arrangement incorporates at least one pump configured to pump the heat transfer medium throughout the conduit arrangement.

Optionally, a thermostat is incorporated therein, is configured to control the flow of the transfer medium through the at least one conduit arrangement and/or thermal store and/or heat exchanger.

Ideally, the heat transfer medium comprises: water; air; glycol; hydrocarbon; refrigerant; phase change fluid; or any combination thereof.

Optionally, said conduit arrangement is coupled to a mains water supply having a pressure ranging from approximately 1 to 6 bar.

Ideally, said heat exchanger or thermal store comprises a fluid such as water; air; glycol; hydrocarbon; refrigerant; phase change fluid; or any combination thereof.

Preferred embodiments of the present invention obviate or mitigate problems typically associated with heat generation by providing a structural panel incorporating an insulation and heating arrangement which utilises a renewable form of energy and reduces carbon emissions and heating bills in the process.

### BRIEF DESCRIPTION OF THE DRAWINGS

Embodiments of the invention are now described by way of example and with reference to the accompanying drawings in which like numerals are used to denote like parts.
Figure 1 is a perspective view of a section of a structural panel incorporating a conduit;
Figure 2 is a perspective view of a building incorporating the heat transfer system;
Figure 3 is a perspective view of a building incorporating an alternative embodiment of the heat transfer system.

### DETAILED DESCRIPTION OF THE DRAWINGS

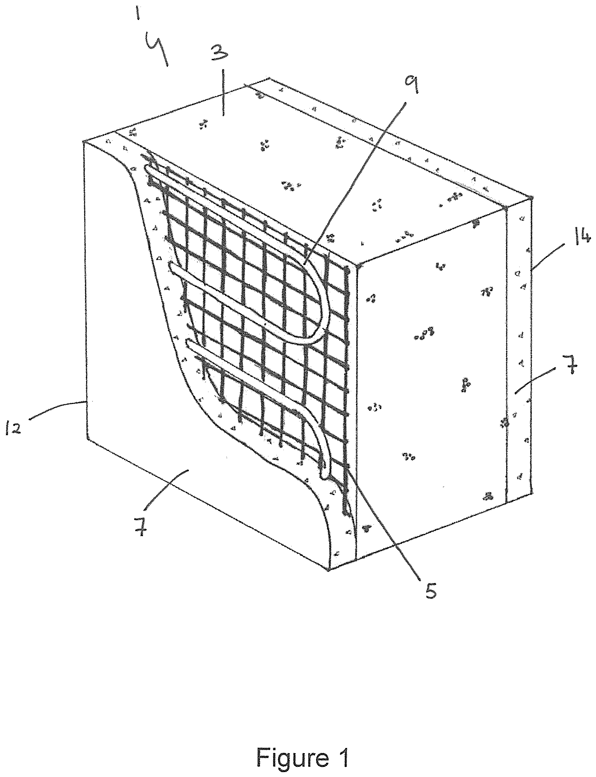

Referring to figure 1 there is shown, generally indicated by the reference numeral 1, a structural panel embodying a first aspect of the invention. The structural panel 1 comprises a core 3, which typically comprises a thermally insulating material such as polystyrene or polyurethane or any other suitable insulation material. In a preferred embodiment the core 3 comprises expanded polystyrene, preferably the expanded polystyrene is in block form, or, alternatively it may comprise pre-expanded polystyrene beads which are bonded together using an adhesive such as to form a block of insulation. The core 3 may have load bearing outer coverings or facings 5 mounted upon the front and/or back sides 12, 14 thereon such as to sandwich the core 3 therebetween. The load bearing coverings or facings 5 typically comprise a reinforcement means such as a mesh made from a metal; plastic; composite material or any combination thereof. Advantageously, the load bearing outer coverings or facings 5 act as a support for a binding material 7 which may be applied to the front and/or back sides 12, 14 in-use. The binding material 7 typically comprises a load bearing material such as concrete; however it may alternatively comprise a finishing material such as plaster, or mud, or any other suitable rendering material. Advantageously, the reinforcement means 5 supports and reinforces the binding material 7 applied thereon to the outer coverings or facings in-use such that the reinforcement means 5 becomes embedded within the binding material 7.

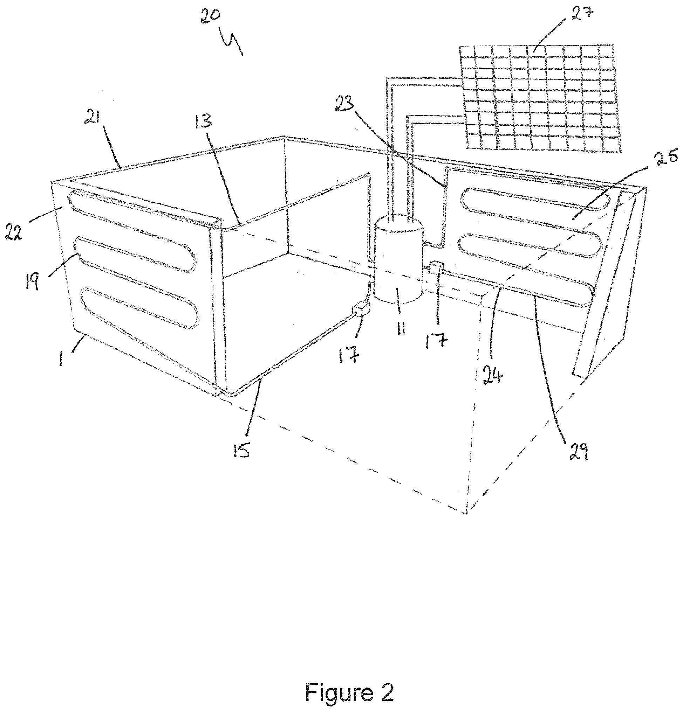

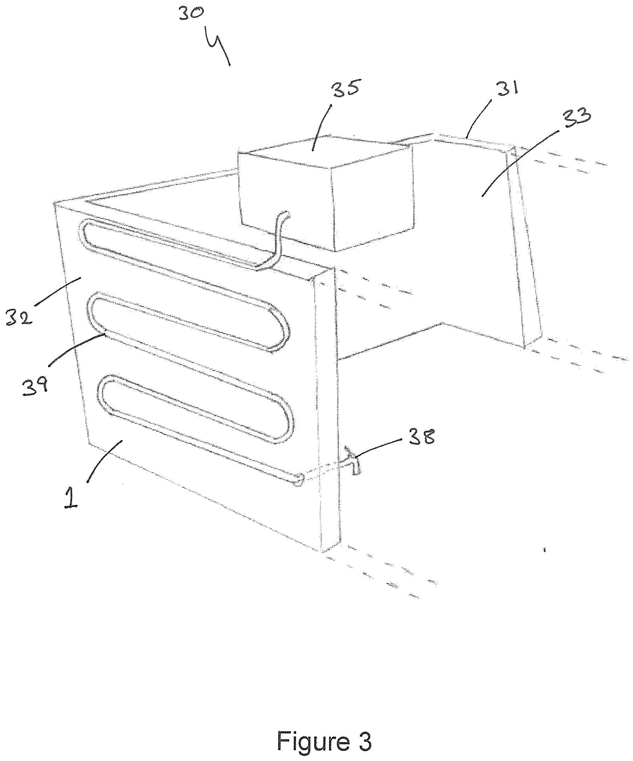

At least one conduit arrangement 9 is positioned upon or substantially near the load bearing outer facings or coverings 5 prior to the application of the binding material 7, to this end, the conduit arrangement 1 may be coupled to the load bearing outer facing or coverings 5 via a fastener, typically the fastener comprises a plurality of cable ties or tie wire or any other suitable fastener. The conduit arrangement(s) 9 preferably comprises a single portion, however, in an alternative arrangement, it may comprise a plurality of conduit sections (not shown) which are coupled together. Advantageously, as the conduit arrangement 9 is positioned upon and/or coupled to the load bearing outer facings or coverings prior to the application of the binding material 7, this allows for the conduit arrangement 9 to be embedded within the binding material 7 when it is applied thereon to the reinforcement means 5. Advantageously, as the conduit arrangement 9 is embedded within the binding material 7 it is afforded a greater degree of protection from external elements. The conduit arrangement 9 typically extends in a substantially non-linear spaced apart arrangement. In a preferred embodiment the conduit arrangement 9 extends in a substantially, convoluted arrangement. The conduit arrangement 9 carries a heat transfer medium which may comprise water; air; glycol; hydrocarbon, refrigerant, phase change fluid, or any combination thereof, or any other suitable transfer medium. The conduit arrangement 9 may be embedded within the front and/or rear faces 12, 14 of the structural panel 1. The conduit arrangement(s) 9 may be configured as an indirect or direct system as shown in figures 2 and 3 respectively. The conduit arrangement 9 typically comprises a plastic material such as ABS, UPVC, CPVC, PB-1, PP, LDPE, HDPE, PVDF however it may also comprise any other suitable plastic or non-metal, alternatively the conduit arrangement 9 may comprise a metallic material. The conduit arrangement 9 typically extends from one side of the structural panel 1 to the opposing side through the core 3. Furthermore the conduit arrangement 9 may extend from one side of the structural panel 1 to the opposing side such that it, at least in part, extends out of and away from the opposing side. To this end the conduit arrangement may extend from the front face 12 to the rear face 14 or vice versa. Additionally or alternatively the conduit arrangement 9 may extend from the front panel 12, through the core 3 and through the rear panel 14 such that at least part of the conduit arrangement 9 extends out of the structural panel 1, away from the rear panel 14. Alternatively the conduit arrangement 9 may extend from the rear face 14 through the core 3 and through the front panel 12 such that it extends out of and away from the front panel 12.

Referring now to figure 2, there is shown, generally indicated by the reference numeral 20, a heat transfer system incorporated within a structure 21 embodying a second aspect of the invention. The structure 21 may incorporate at least one structural panel 1, however preferably the walls of the structure incorporate a plurality of structural panels 1 coupled together such as to form the permanent/semi-permanent structure 21. Advantageously, due to the high thermal mass of the binding material 7 in conjunction with the insulating core 3, the structural panels 1 aid in the retention and regulation of the internal temperature within the structure 21. On at least one exterior face 22 of the structural panels 1 a first conduit arrangement 19 is embedded within the binding material 7. The first conduit arrangement 19 may be coupled to the heat exchanger 11, preferably at least part of the first conduit arrangement 19 extends through and out of the structural panel 1 for coupling to the heat exchanger 11 which is typically located within the building 21. The first conduit arrangement 19 comprises flow and return pathways 13, 15 which extend, at least in part, out of panel 1. The heat transfer medium may be pressurised such as to circulate substantially throughout the at least one conduit arrangement 19, for example the at least one conduit arrangement 19 may be coupled to a mains water supply which typically has a pressure ranging from approximately 1 to 6 bar.

Alternatively at least one of the flow and/or return pathways 13, 15 may incorporate a pump 17 or any other suitable actuation device, which is configured to pump the heat transfer medium contained therein substantially throughout the conduit arrangement 19 in-use. At least one additional conduit arrangement may be coupled to the heat exchanger 11. In the illustrated embodiment a second conduit arrangement 29 is coupled to the heat exchanger 11. Typically the second conduit arrangement 29 is recessed within the binding material 7 of at least one interior face 25 of the structural panel 1.The first conduit arrangement 19 may be embedded in the exterior face 22 of said at least one of the structural panels 1 and the second conduit arrangement 29 is typically embedded in an interior face 25 of the at least one structural panel 1 or in an interior face of a second structural panel 1. The second conduit arrangement 29 further carries the heat transfer medium, also typically comprises flow and return pathways 23, 24, furthermore at least one of the flow and/or return pathways 23, 24 typically incorporates a pump 17. Additionally or alternatively, the flow of the transfer medium within the conduit arrangement(s) 19, 29 may be controlled by a thermostat (not shown) incorporated within the system 20, advantageously this allows for the system 20 to be turned off in situations where no useable thermal energy is available. In a preferred embodiment the heat exchanger 11 typically comprises a tank having a plurality of inlet and outlet pathways, typically comprising pipes, at least one of each for each respective conduit arrangement 19, 29. The heat exchanger 11 is configured to transfer the thermal energy contained within the transfer medium of one conduit arrangement 19 to that of another conduit arrangement 29 in-use. It should be understood that the first and second conduit arrangements 19, 29 may be embedded within the exterior, interior walls 22, 25 respectively, of the structure 21 or vice versa.

Referring now to Figure 3, there is shown, generally indicated by the reference numeral 30, an alternative embodiment of the heat transfer system incorporated within a structure 31 embodying a second aspect of the invention. The walls of the structure 31 typically incorporate at least one structural panel 1. On at least one exterior face 32 of the at least one structural panel 1, a conduit arrangement 39 is embedded within the binding material 7. The conduit arrangement 39 may be coupled to at least one thermal store 35, typically located within the structure 31. The thermal store 35 may comprise a tank or container any other suitable thermal store arrangement suitable for storing a heat transfer medium. The conduit arrangement 39 has at least one outlet 38 projecting substantially out of the structural panel 1, typically the outlet 38 projects out of an interior face 33 of at least one of the structural panels 1, however it may alternatively flow out of an exterior face 32. The outlet 38 is typically located upon at least one end of the conduit arrangement 39 as shown in Figure 3. The outlet 38 typically comprises a tap or nozzle or any other outlet suitable for the egress of the heat transfer medium. The thermal store 35 is in fluid communication with the outlet 38 via the conduit arrangement 39. The heat transfer medium is configured to flow out/to the outlet 38, to this end, the thermal store 35 is positioned substantially above the outlet 38, with the conduit arrangement 39 typically comprising a single flow pathway, the heat transfer medium contained within the thermal store 35 is operable to flow under gravity from the thermal store 35, through the conduit arrangement 39 to the outlet 38. Advantageously, this allows the heat transfer medium to flow without the aid of a pump or any other such device and allowing the system to be used in areas where no power is available for such a setup.

In a preferable embodiment as shown in figure 2, the first conduit arrangement 9 receives thermal energy as a result of the sun's rays being absorbed and conducted through the binding material 7 of the exterior face 22 of the panel 1 in-use. The heat transfer medium contained within the first conduit arrangement 9 receives this thermal energy, and is subsequently circulated throughout the first conduit arrangement 9, typically via the pump 17, and into the heat exchanger 11 in-use. Within the heat exchanger 11 the thermal energy from the transfer medium of the first conduit arrangement 9 is transferred to the transfer medium of the second conduit arrangement 19, this is subsequently circulated through the second conduit arrangement 19. Advantageously, as the second conduit arrangement 19 is contained within the binding material of an interior face 25 of the structural panel 1, it can therefore act as a radiator, and the heat may be dispersed into the interior of the structure 21.

In an alternative embodiment a solar panel arrangement 27 may be provided and configured to heat the transfer medium contained within a conduit arrangement 19, 29, 39 which is coupled to the heat exchanger 11 or thermal store 35. The solar panel arrangement 27 may be configured to power an electric heater such as an immersion heating element or any other suitable device, contained within the heat exchanger 11 and/or the thermal store 35. Advantageously, the solar panel arrangement will increase the efficiency of the heat transfer system 20, 30 by generating thermal energy as a result of the production of electricity via photovoltaic means. Further advantageously, as the solar panel arrangement 27 does not require significant sun exposure, it will still be able to generate a substantial amount of electricity even in overcast conditions. Additionally, the conduit arrangement 19, 29, 39 may incorporate a pump (not shown) to circulate the transfer medium therein.

In a further alternative embodiment (not shown) solar collectors may be positioned on an elevated location of the structure 21 such as to maximise exposure to the sun in-use. The solar collectors may contain a transfer medium and be coupled to the heat exchanger 11, via a conduit arrangement 19 and therein the thermal energy received from the solar collectors may be transferred to a conduit arrangement 29 which is embedded within an interior wall 25 of the structure 21 to act as a radiator in use.

The invention is not limited to the embodiment(s) described herein but can be amended or modified without departing from the scope of the present invention.

## Claims

1. A structural panel comprising:
a. A core made from a thermally insulating material;
b. Wherein said core is sandwiched between load bearing outer coverings or facings;
c. Wherein said load bearing coverings or facings each comprise a reinforcement means embedded within a binding material;
d. Wherein at least one conduit arrangement is embedded within said binding material.

2. The structural panel as claimed in claim 1, wherein said conduit arrangement is configured to carry a heat transfer medium whilst embedded within said binding material in-use.

3. The structural panel as claimed in any preceding claim, wherein said conduit arrangement extends in a substantially convoluted arrangement.

4. The structural panel as claimed in any preceding claim wherein said conduit arrangement comprises a single portion.

5. The structural panel as claimed in claims 1 to 3, wherein said conduit arrangement comprises a plurality of conduit sections which are coupleable together.

6. The structural panel as claimed in any preceding claim, wherein said conduit arrangement includes flow and return pathways, preferably wherein said flow and return pathways extend out of the structural panel.

7. The structural panel as claimed in any preceding claim, wherein said core comprises expanded polystyrene in block form, or pre-expanded polystyrene beads bonded together using an adhesive to form a block of insulation.

8. A system for transferring heat comprising:
a. A structure incorporating at least one structural panel as claimed in any preceding claim;
b. Wherein at least one conduit arrangement is embedded in an exterior face of said at least one structural panel;
c. Wherein said conduit arrangement is coupled to at least one of a heat exchanger or thermal store;
d. Wherein said conduit arrangement is configured to carry a heat transfer medium therein.

9. The system as claimed in claim 8, wherein the heat exchanger is configured to transfer thermal energy from the transfer medium of said at least one conduit arrangement to at least one other transfer medium in at least one other conduit arrangement in-use.

10. The system as claimed in claim 8, wherein a first conduit arrangement is embedded in the exterior face of said at least one of said structural panels and a second conduit arrangement is embedded in an interior face of said at least one structural panel or in an interior face of a second structural panel.

11. The system as claimed in claim 10, wherein the first and second conduit arrangements are coupled to the heat exchanger, wherein the heat transfer medium contained within the first conduit arrangement, is configured to absorb thermal energy from the atmosphere exterior of the structure.

12. The system as claimed in claim 11, wherein the heat exchanger is configured to transfer the thermal energy from the first to the second conduit arrangement, wherein the second conduit arrangement is configured to dissipate said thermal energy into the interior of said structure.

13. The system as claimed in claim 8, wherein the at least one conduit arrangement is embedded in the exterior face of said at least one structural panel, wherein the conduit arrangement is coupled to the thermal store and preferably wherein said thermal store is in fluid communication with at least one outlet via said at least one conduit arrangement and/or wherein said thermal store is located in a position substantially above said outlet, wherein said heat transfer medium is operable to flow out of said outlet in-use, preferably wherein said outlet extends out of an interior face of said at least one structural panel, wherein said outlet comprises a tap, or nozzle.

14. The system as claimed in any preceding claim, wherein a solar panel arrangement is provided and is configured to heat the transfer medium of the at least one conduit arrangement, preferably wherein said solar panel arrangement is configured to power an electric heater such as an immersion heater located within said conduit arrangement and/or thermal store and/or heat exchanger in-use.

15. The system as claimed in claims 8 to 13, wherein a solar collector arrangement may be coupled to the heat exchanger via a conduit arrangement, wherein a transfer contained medium therein is configured to absorb thermal energy and transfer this within the heat exchanger or thermal store in-use.
